# EUROPEAN PATENT APPLICATION

(11) **EP 2 314 831 A1**
(43) Date of publication of application: **27.04.2011**
(21) Application number: 10183864.7
(22) Date of filing: 13.05.2005
(51) Int. Cl.: F01D 11/14, F01D 11/20

(54) **Turbine case reinforcement in a gas turbine jet engine**

(30) Priority: 17.05.2004 US 571701 P
(62) Divisional of application: 05849434.5
(71) Applicant: Carlton Forge Works, Paramount, CA 90723 (US)
(72) Inventor: Cardarella, James L. Jr., Newport Coast, CA 92657 (US)
(74) Representative: Widdowson, Nicholas Edward

(57) **Abstract**

A low or high pressure turbine case (204) is machined on its outside surface to form circumferential notches (302). The notches may coincide with internal locations of seals (210) for the blades (208) or with "hot spots" that have been identified, for example. A stiffener ring (304) may be shrunk with an interference fit into each notch (302) through inducing temperature differentials between the ring and the case. The radially compressive circumferential force exerted by each ring can inhibit the low or high pressure turbine case from expanding as much as it would otherwise. In some applications, a stiffener ring can improve blade tip clearance or counterbalance "hot spots", stiffen the case, improve case cooling, or other benefits, depending upon the particular application.

## Description

### CROSS REFERENCE TO RELATED APPLICATIONS

This application claims the benefit of U.S. Provisional Application No. 60/571,701, filed on May 17, 2004, titled "METHOD AND SYSTEM FOR IMPROVED BLADE TIP CLEARANCE IN A GAS TURBINE JET ENGINE."

A nonprovisional U.S. application entitled "METHOD AND SYSTEM FOR IMPROVED BLADE TIP CLEARANCE IN A GAS TURBINE JET ENGINE" is being filed concurrently by L. James Cardarella, John Usherwood and Andres Del Campo, wherein the contributions by John Usherwood and Andres Del Campo have been assigned to Carlton Forge Works, a California corporation.

### BACKGROUND

Since the development of the gas turbine jet engine, blade tip clearance within the interior of the casing has been a challenging problem. Blade tip and inter-stage sealing have taken on a prominent role in engine design since the late 1960's. This is because the clearance between the blade tips and surrounding casing tends to vary due primarily to changes in thermal and mechanical loads on the rotating and stationary structures. On today's largest land-based and aero turbine engines, the high pressure turbine case ("HPTC") and low pressure turbine case ("LPTC") have such large diameters that they are more susceptible to expanding excessively and becoming out-of-round, exacerbating the blade tip clearance problem.

Reduced clearance in both the HPTC and the LPTC can provide dramatic reductions in specific fuel consumption ("SFC"), compressor stall margin and engine efficiency, as well as increased payload and mission range capabilities for aero engines. Improved clearance management can dramatically improve engine service life for land-based engines and time-on-wing ("TOW") for aero engines. Deterioration of exhaust gas temperature ("EGT") margin is the primary reason for aircraft engine removal from service. The Federal Aviation Administration ("FAA") certifies every aircraft engine with a certain EGT limit. EGT is used to indicate how well the HPTC is performing. Specifically, EGT is used to estimate the disk temperature within the HPTC. As components degrade and clearance between the blade tips and the seal on the interior of the casing increase, the engine has to work harder (and therefore runs hotter) to develop the same thrust. Once an engine reaches its EGT limit, which is an indication that the high pressure turbine disk is reaching its upper temperature limit, the engine must be taken down for maintenance. Maintenance costs for major overhauls of today's large commercial gas turbine jet engines can easily exceed one million dollars.

### ASPECTS OF THE INVENTION

Aspects of the invention are set forth in the following numbered clauses.
1. A method, comprising:
   encircling an outer circumferential surface of a turbine case of a gas turbine jet engine using an inner circumferential surface of a stiffener ring; and
   applying radially compressive forces to said outer circumferential surface of said turbine case, along the length of the circumference of said inner circumferential surface, using said stiffener ring encircling said turbine case.
2. The method of clause 1 wherein said radially compressive force applying includes shrink interference fitting said stiffener ring inner circumferential surface to said outer circumferential surface of said turbine case.
3. The method of clause 1 wherein said radially compressive force applying includes seating said stiffener ring inner circumferential surface within a notch defined by said outer circumferential surface of said turbine case and shaped to secure said stiffener ring against displacement in a direction longitudinal to said turbine case.
4. The method of clause 1 wherein said turbine case surrounds a turbine adapted for rotation within said turbine case along an axis of rotation wherein said radially compressive forces are directed to a center located on said axis of rotation.
5. The method of clause 4 wherein said turbine case has a seal encircling tips of said turbine blades of said turbine and wherein said radially compressive force applying confines the clearance between said seal and said blade tips to be within a predetermined range.
6. The method of clause 5 wherein said turbine case is formed of a first material and wherein said stiffener ring is formed of a second material that is different from said first material of said turbine case, said second material having a lower coefficient of thermal expansion than said first material of said turbine.
7. The method of clause 5 wherein said radially compressive forces applied to said outer circumferential surface of said turbine case, form an indentation in said outer circumferential surface along the length of the circumference of said inner circumferential surface of the stiffener ring, as the temperature of the turbine case rises.
8. The method of clause 1 further comprising redesigning the engine to reduce blade tip clearance as compared to the blade tip clearance of said engine absent said radially compressive force applying.
9. The method of clause 1 wherein said applying radially compressive forces permits at least one of the following to be reduced during operation of said engine: a) turbine case out-of-roundness; b) specific fuel consumption; c) clearance between an inner surface of said turbine case and blade tips of said turbine; d) exhaust gas temperature; e) exhaust gas pollution.
10. The method of clause 1 further comprising:
   encircling a second outer circumferential surface of said turbine case of said gas turbine jet engine using a second inner circumferential surface of a second stiffener ring; and
   applying radially compressive forces to said second outer circumferential surface of said turbine case, along the length of the circumference of said second inner circumferential surface, using said second stiffener ring encircling said turbine case.
11. A method of operating a gas turbine jet engine, comprising:
   rotating a turbine within a turbine case along an axis of rotation; and
   applying radially compressive forces to an outer circumferential surface of said turbine case using a stiffener ring encircling said turbine case, said radially compressive forces being applied along the length of the circumference of an inner circumferential surface of said stiffener ring and directed to a center positioned on said axis of rotation.
12. The method of clause 11 wherein said turbine case has a seal encircling tips of said turbine blades of said turbine and wherein said radially compressive force applying confines the clearance between said seal and said blade tips to be within a predetermined range as said turbine rotates within said turbine case.
13. The method of clause 11 further comprising dissipating heat from said turbine case using said stiffener ring.
14. The method of clause 11 further comprising redesigning the engine to reduce blade tip clearance as compared to the blade tip clearance of said engine absent said radially compressive force applying.
15. The method of clause 11 wherein said applying radially compressive forces permits at least one of the following to be reduced during operation of said engine: a) turbine case out-of-roundness; b) specific fuel consumption; c) clearance between an inner surface of said turbine case and blade tips of said turbine; d) exhaust gas temperature; e) exhaust gas pollution.
16. The method of clause 15 wherein said turbine case is formed of a first material and wherein said stiffener ring is formed of a second material that is different from said first material of said turbine case, said second material having a lower coefficient of thermal expansion than said first material of said turbine.
17. The method of clause 11 further comprising applying radially compressive forces to a second outer circumferential surface of said turbine case using a second stiffener ring encircling said turbine case, said radially compressive forces being applied along the length of the circumference of a second inner circumferential surface of said second stiffener ring and directed to a center positioned on said axis of rotation.
18. A gas turbine jet engine, comprising:
   a turbine case having an outer circumferential surface;
   a turbine adapted to rotate along an axis of rotation within said turbine case; and
   a stiffener ring having an inner circumferential surface adapted to apply radially compressive forces to said outer circumferential surface of said turbine case, along the length of the circumference of said inner circumferential surface.
19. The engine of clause 18 wherein said stiffener ring is affixed to said turbine case with a shrink interference fitting which causes said stiffener ring to apply said radially compressive forces to said outer circumferential surface of said turbine case.
20. The engine of clause 18 wherein said outer circumferential surface of said turbine case defines a notch adapted to receive said stiffener ring and secure said stiffener ring against displacement in a direction longitudinal to said turbine case.
21. The engine of clause 18 wherein said radially compressive forces are directed to a center located on said axis of rotation.
22. The engine of clause 21 wherein said turbine has turbine blade, each of which has a tip at a distal end of each blade, and wherein said turbine case has an inner circumferential surface which has a seal encircling said tips of said turbine blades of said turbine and wherein said radially compressive force applied by said stiffener ring confines the clearance between said seal and said blade tips to be within a predetermined range.
23. The engine of clause 21 wherein said outer circumferential surface of said turbine case defines a notch adapted to receive said stiffener ring and secure said stiffener ring against displacement in a direction longitudinal to said turbine cases and wherein said notch is at a longitudinal location coinciding with said seal on said inner surface of said turbine case.
24. The engine of clause 18 wherein said turbine case is formed of a first material and wherein said stiffener ring is formed of a second material that is different from said first material of said turbine case, said second material having a lower coefficient of expansion than said first material of said turbine case.
25. The engine of clause 22 further wherein said stiffener ring permits redesigning the engine to reduce blade tip clearance as compared to the blade tip clearance of said engine absent said radially compressive force applying.
26. The engine of clause 22 wherein said stiffener ring permits at least one of the following to be reduced during operation of said engine: a) turbine case out-of-roundness; b) specific fuel consumption; c) clearance between an inner surface of said turbine case and blade tips of said turbine; d) exhaust gas temperature; e) exhaust gas pollution.
27. The engine of clause 18 wherein said turbine case has second outer circumferential surface, and wherein said engine further comprises a second stiffener ring having a second inner circumferential surface adapted to apply radially compressive forces to a second outer circumferential surface of said turbine case, along the length of the circumference of said second inner circumferential surface.
28. A method, comprising:
   (a) machining at least one notch circumferentially at a predetermined location into an outer surface of a turbine case of a gas turbine jet engine; and
   (b) seating a stiffener ring in each said at least one notch through a shrink interference fit;
   wherein said stiffener ring applies compressive circumferential force to said turbine case.
29. The method according to clause 28 wherein said seating further comprises:
   heating said stiffener ring to cause a first inside diameter of said stiffener ring to increase to a second inside diameter that is larger than an outside diameter of said at least one notch at an ambient temperature;
   positioning said stiffener ring in said at least one notch; and
   allowing said stiffener ring to cool to said ambient temperature, causing said stiffener ring to decrease from said second inside diameter toward said first inside diameter, but resisted by said outside diameter of said at least one notch, giving rise to said shrink interference fit.
30. The method according to clause 28 wherein said seating further comprises:
   cooling said turbine case to cause a first outside diameter of said at least one notch to decrease to a second outside diameter that is smaller than an inside diameter of said stiffener ring at an ambient temperature;
   positioning said stiffener ring in said at least one notch; and
   allowing said turbine case to heat up to said ambient temperature, causing said at least one notch to increase from said second outside diameter toward said first outside diameter, but resisted by said inside diameter of said stiffener ring, giving rise to said shrink interference fit.
31. The method according to clause 28 wherein said seating further comprises:
   heating said stiffener ring to cause a first inside diameter of said stiffener ring to increase to a second inside diameter;
   cooling said turbine case to cause a first outside diameter of said at least one notch to decrease to a second outside diameter that is smaller than said second diameter of said stiffener ring;
   positioning said stiffener ring in said at least one notch;
   allowing said stiffener ring to cool to said ambient temperature; and
   allowing said turbine case to heat up to said ambient temperature;
   wherein said stiffener ring decreases from said second inside diameter toward said first inside diameter, and said at least one notch increases from said second outside diameter toward said first outside diameter, giving rise to said shrink interference fit.
32. The method according to clause 28 wherein said machining further comprises:
   machining said at least one notch circumferentially into an outer surface of said turbine case at a location coinciding with a labyrinth seal on an inner surface of said turbine case.
33. The method according to clause 28 wherein said machining further comprises:
   machining said at least one notch circumferentially into an outer surface of said turbine case at a location coinciding with a hot spot of said turbine case.
34. The method according to clause 28 further comprising:
   machining said stiffener ring to a predetermined shape to match with a shape of said at least one notch.
35. The method according to clause 34 wherein said notch machining comprises machining said at least one notch circumferentially at said predetermined location into said outer surface of said turbine case with a reverse taper; and wherein said stiffener ring machining comprises machining said stiffener ring on an inside diameter to match said reverse taper of said at least one notch.
36. The method according to clause 34 wherein said notch machining comprises machining said at least one notch circumferentially at said predetermined location into said outer surface of said turbine case with a chevron shape; and
   wherein said stiffener ring machining comprises machining said stiffener ring on an inside diameter to match said chevron shape of said at least one notch.
37. The method according to clause 34 wherein said stiffener ring machining comprises machining a top surface of said stiffener ring so that when said stiffener ring is seated in said at least one notch, said top surface of said stiffener ring is flush with said outer surface of said turbine case.
38. The method according to clause 34 wherein said stiffener ring machining comprises machining said stiffener ring from a nickel-base super alloy.
39. The method according to clause 34 wherein said stiffener ring machining comprises machining said stiffener ring from a material that is different from a material of said turbine case, said material of said stiffener ring having a lower coefficient of expansion than said material of said turbine case.
40. A method according to clause 34 wherein said notch machining comprises machining said at least one notch into said outer surface of said turbine case in a first direction, wherein a plurality of grooves are formed and aligned on said outer surface in said first direction; and
   wherein said stiffener ring machining comprises machining an inner surface of said stiffener ring in a second direction, wherein a plurality of grooves are formed and aligned on said inner surface in said second direction;
   wherein when said outer surface of said at least one notch and said inner surface of said stiffener ring are seated together, said plurality of grooves on said outer surface of said at least one notch and said plurality of grooves on said inner surface of said stiffener ring align in a cross-hatch manner to each other, increasing the frictional forces between said at least one notch and said stiffener ring and reducing the potential for spinning of said stiffener ring within said at least one notch.
41. An apparatus for use in a gas turbine jet engine, the apparatus comprising:
   a turbine case having an outer surface which defines at least one notch machined circumferentially into said outer surface of said turbine case of said gas turbine jet engine at a predetermined location; and
   a stiffener ring seated in each said at least one notch through a shrink interference fit;
   wherein said stiffener ring applies compressive circumferential force to said turbine case.
42. The apparatus according to clause 41 further comprising:
   a means for heating said stiffener ring to cause a first inside diameter of said stiffener ring to increase to a second inside diameter that is larger than an outside diameter of said at least one notch at an ambient temperature, wherein after said stiffener ring is positioned in said at least one notch, said stiffener ring is allowed to cool to said ambient temperature, causing said stiffener ring to decrease from said second inside diameter toward said first inside diameter, but resisted by said outside diameter of said at least one notch, giving rise to said shrink interference fit.
43. The apparatus according to clause 41 further comprising:
   a means for cooling said turbine case to cause a first outside diameter of said at least one notch to decrease to a second outside diameter that is smaller than an inside diameter of said stiffener ring at an ambient temperature, wherein after said stiffener ring is positioned in said at least one notch, said turbine case is allowed to heat up to said ambient temperature, causing said at least one notch to increase from said second outside diameter toward said first outside diameter, but resisted by said inside diameter of said stiffener ring, giving rise to said shrink interference fit.
44. The apparatus according to clause 41 further comprising:
   a means for heating said stiffener ring to cause a first inside diameter of said stiffener ring to increase to a second inside diameter; and
   a means for cooling said turbine case to cause a first outside diameter of said at least one notch to decrease to a second outside diameter that is smaller than said second diameter of said stiffener ring, wherein after said stiffener ring is positioned in said at least one notch, said stiffener ring is allowed to cool to said ambient temperature and said turbine case is allowed to heat up to said ambient temperature, causing said stiffener ring to decrease from said second inside diameter toward said first inside diameter, and said at least one notch to increase from said second outside diameter toward said first outside diameter, giving rise to said shrink interference fit.
45. The apparatus according to clause 41 wherein said predetermined location for machining said at least one notch circumferentially into said outer surface of said turbine case is at a location coinciding with a labyrinth seal on an inner surface of said turbine case.
46. The apparatus according to clause 41 wherein said predetermined location for machining said at least one notch circumferentially into said outer surface of said turbine case is at a location coinciding with a hot spot of said turbine case.
47. The apparatus according to clause 41 wherein said stiffener ring further comprises a predetermined shape machined to match with a shape of said at least one notch.
48. The apparatus according to clause 41 wherein said notch has a reverse taper machined into said at least one notch; and wherein said stiffener ring has a matching reverse taper machined on an inside diameter of said stiffener ring.
49. The apparatus according to clause 41 further comprising:
   a chevron shape machined into said at least one notch; and
   a matching chevron shape machined on an inside diameter of said stiffener ring.
50. The apparatus according to clause 41 wherein said stiffener ring further comprises:
   a top surface of said stiffener ring machined so that when said stiffener ring is seated in said at least one notch, said top surface of said stiffener ring is flush with said outer surface of said turbine case.
51. The apparatus according to clause 41 wherein said stiffener ring is machined from a nickel-base super alloy.
52. The apparatus according to clause 41 wherein said stiffener ring is machined from a material that is different from a material of said turbine case, said material having a lower coefficient of thermal expansion than said material of said turbine case.
53. The apparatus according to clause 41 further wherein said at least one notch of said turbine case has a machined outer surface which defines a plurality of grooves aligned in a first direction on said machined outer surface of said at least one notch; and
   wherein said stiffener ring has a machined inner surface which defines a plurality of grooves aligned in a second direction on said machined inner surface of said stiffener ring;
   wherein when said outer surface of said at least one notch and said inner surface of said stiffener ring are interference shrink fit together, said plurality of grooves on said outer surface of said at least one notch and said plurality of grooves on said inner surface of said stiffener ring align in a cross-hatch manner to each other, increasing the frictional forces between said at least one notch and said stiffener ring and reducing the potential for spinning of said stiffener ring within said at least one notch.
54. A method comprising:
   (a) machining at least one notch circumferentially at a predetermined location into an outer surface of a turbine case of a gas turbine jet engine;
   (b) seating a stiffener ring in each said at least one notch, said stiffener ring having a first end and a second end;
   (c) linking said first end and said second end of said stiffener ring to an actuator; and
   (d) actuating said actuator to pull said first and second ends of said stiffener ring together;
   wherein said stiffener ring applies compressive circumferential force to said turbine case.
55. The method according to clause 54 wherein said machining further comprises machining said at least one notch circumferentially into an outer surface of said turbine case at a location coinciding with a labyrinth seal on an inner surface of said turbine case.
56. The method according to clause 54 wherein said machining further comprises machining said at least one notch circumferentially into an outer surface of said turbine case at a location coinciding with a hot spot of said turbine case.
57. The method according to clause 54 further comprising machining said stiffener ring to a predetermined shape to match with a shape of said at least one notch.
58. The method according to clause 54 further comprising machining said stiffener ring from a nickel-base super alloy.
59. The method according to clause 54 further comprising machining said stiffener ring from a material that is different from a material of said turbine case, said material of said stiffener ring having a lower coefficient of thermal expansion than said material of said turbine case.
60. The method according to clause 54 further comprising:
   connecting a controller to said actuator through an electrical connection;
   receiving in said controller a plurality of temperature readings from a plurality of temperature sensors located near said stiffener ring; and
   processing by said controller said plurality of temperature readings to determine how much to pull said first and second ends of said stiffener ring together by said actuator to exert a predetermined compressive circumferential force on said turbine case.
61. The method according to clause 54 wherein said stiffener ring is a one of a c-ring, a chain like multiple segmented ring, and a strip of non-metallic material.
62. An apparatus for use in a gas turbine jet engine, the apparatus comprising:
   a turbine case having an outer surface which defines at least one notch machined circumferentially into said outer surface of said turbine case of the gas turbine jet engine at a predetermined location;
   a stiffener ring seated in each said at least one notch, said stiffener ring having a first end and a second end; and
   an actuator, wherein said first and second ends are linked to said actuator and said actuator when actuated is adapted to pull said first and second ends together;
   wherein said stiffener ring applies compressive circumferential force to said turbine case.
63. The apparatus according to clause 62 wherein said turbine case has an inner surface and a labyrinth seal on said inner surface and wherein said predetermined location for machining said at least one notch circumferentially into said outer surface of said turbine case is at a location coinciding with said labyrinth seal on said inner surface of said turbine case.
64. The apparatus according to clause 62 wherein said turbine case has a hot spot and wherein said predetermined location for machining said at least one notch circumferentially into said outer surface of said turbine case is at a location coinciding with said hot spot of said turbine case.
65. The apparatus according to clause 62 wherein said stiffener ring further comprises a predetermined shape to match with a shape of said at least one notch.
66. The apparatus according to clause 62 wherein said stiffener ring is machined from a nickel-base super alloy.
67. The apparatus according to clause 62 wherein said stiffener ring is machined from a material that is different from a material of said turbine case, said material of said stiffener ring having a lower coefficient of thermal expansion than said material of said turbine case.
68. The apparatus according to clause 62 further comprising:
   a controller connected to said actuator through an electrical connection; and
   a plurality of temperature sensors located near said stiffener ring, wherein said controller is adapted to receive a plurality of temperature readings from said plurality of temperature sensors;
   wherein said controller is adapted to process said plurality of temperature readings to determine how much to pull said first and second ends of said stiffener ring together by said actuator to exert a predetermined compressive circumferential force on said turbine case.
69. The apparatus according to clause 62 wherein said stiffener ring is a one of a c-ring, a chain like multiple segmented ring, and a strip of non-metallic material.

### BRIEF DESCRIPTION OF THE DRAWINGS

**FIG. 1** shows a schematic diagram of the overall structure of a typical gas turbine jet engine.
**FIG. 2** shows a sectional schematic diagram of a low pressure turbine case of a typical gas turbine jet engine.
**FIG. 3** shows a sectional schematic diagram of the low pressure turbine case of **FIG. 2** fitted with stiffener rings in an embodiment of the present description.
**FIG. 4** shows a sectional schematic diagram of Section **A** of the low pressure turbine case of **FIG.3**, showing the stiffener ring about to be seated in an embodiment of the present description.
**FIG. 5** shows a sectional schematic diagram of a section of a low pressure turbine case showing the stiffener ring about to be seated in another embodiment of the present description.
**FIG. 6** shows a sectional schematic diagram of a section of a low pressure turbine case showing the stiffener ring seated in another embodiment of the present description.
**FIG. 7** shows a sectional schematic diagram of a section of a low pressure turbine case showing the stiffener ring seated in another embodiment of the present description.
**FIG. 8** shows an improvement in clearance under load in an embodiment of the present description.
**FIGS. 9A****,** **9B, and 9C** show sectional schematic diagrams of a section of a low pressure turbine case having the stiffener ring positioned on the low pressure turbine case with a hydraulic nut and secured with a locking nut in another embodiment of the present description.
**FIG. 10** shows a schematic diagram of a low pressure turbine case having stiffener rings actuated by hydraulic, electric, or other means in another embodiment of the present description.
**FIG. 11** shows a schematic cross-sectional diagram of a low pressure turbine case having stiffener rings.

### DETAILED DESCRIPTION OF THE DRAWINGS

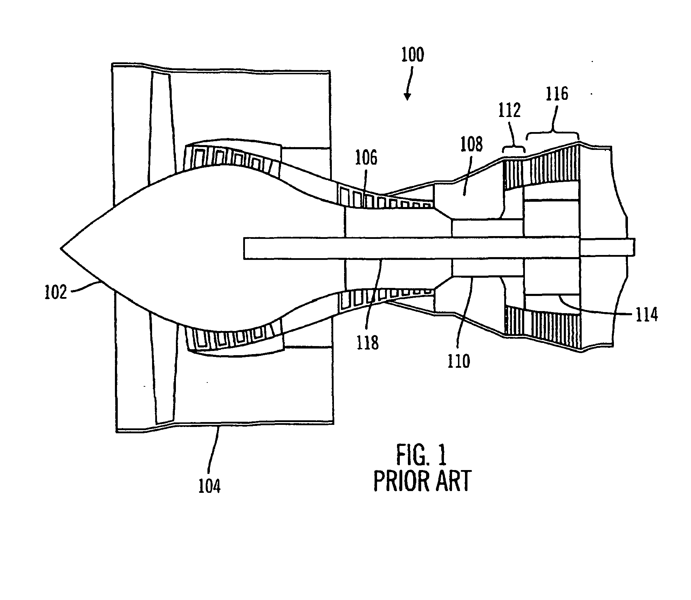

Referring now to the Figures, in which like reference numerals and names refer to structurally and/or functionally similar elements thereof, **Figure 1** shows a schematic diagram of the overall structure of a typical gas turbine jet engine. Referring now to **FIG. 1****,** Gas Turbine Jet Engine **100** has Fan **102** for air intake within Fan Frame **104.** High Pressure Compressor Rotor **106** and its attached blades and stators force air into Combustor **108,** increasing the pressure and temperature of the inlet air. High Pressure Turbine Rotor **110** and its accompanying blades and stators are housed within High Pressure Turbine Case **112.** Low Pressure Turbine Rotor **114** and its accompanying blades and stators are housed within Low Pressure Turbine Case **116.** The turbine extracts the energy from the highpressure, high-velocity gas flowing from Combustor **108** and is transferred to Low Pressure Turbine Shaft **118.**

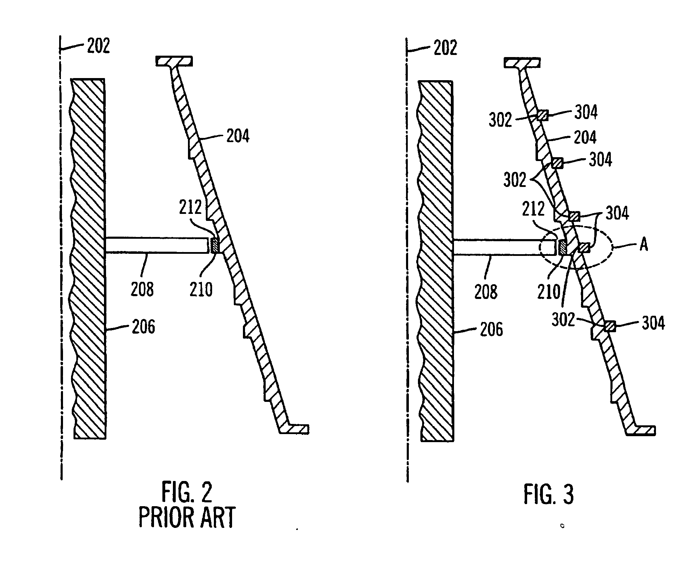

**Figure 2** shows a sectional schematic diagram of a low pressure turbine case of a typical gas turbine jet engine. Referring now to **FIG. 2****,** Centerline **202** runs through the center of Low Pressure Turbine Case **204** (shown in cross-section). Rotor **206** (shown in cross-section) has Blade **208** attached thereto and rotates on an axis of rotation along centerline **202.** One skilled in the art will recognize that many more blades and stators would normally be present within Low Pressure Turbine Case **204.** Only one Blade **208** is shown for simplicity.

Labyrinth seal designs vary by application. Sometimes the labyrinth seals are located on the blade tips, and sometimes they are located on the inside diameter of the cases as shown in **FIG. 2****.** Labyrinth Seals **210** (shown in cross-section) line the inside diameter of Low Pressure Turbine Case **204** forming a shroud around each rotating Blade **208**, limiting the air that spills over the tips of Blades **208**. The shape of Labyrinth Seals **210** is designed to create air turbulence between the tips of each Blade **208** and the corresponding Labyrinth Seal **210**. The air turbulence acts as a barrier to retard air from escaping around the tips of Blades **208**. It is appreciated that seals performing similar functions are often referred to by other names. Blade Tip Clearance **212**, defined as the distance between the tip of Blade **208** and Labyrinth Seal **210**, will vary over the operating points of the engine. The mechanisms behind Blade Tip Clearance **212** variations come from the displacement or distortion of both static and rotating components of the engine due to a number of loads on these components and expansion due to heat. Axis-symmetric clearance changes are due to uniform loading (centrifugal, thermal, internal pressure) on the stationary or rotating structures that create uniform radial displacement. Centrifugal and thermal loads are responsible for the largest radial variations in Blade Tip Clearance **212.**

Wear mechanisms for Labyrinth Seal **210** can be generally categorized into three major categories: rubbing (blade incursion), thermal fatigue, and erosion. Engine build clearances in both high pressure and low pressure turbine cases are chosen to limit the amount of blade rubbing. Studies have shown that improved blade tip clearances in the high pressure and low pressure turbine cases can result in significant life cycle cost ("LCC") reductions.

As a cold engine is started, a certain amount of Blade Tip Clearance **212** exists between each Labyrinth Seal **210** and the tip of Blades **208**. Blade Tip Clearance **212** is rapidly diminished as the engine speed is increased for takeoff due to the centrifugal load on Rotor 206 as well as the rapid heating of Blades **208**, causing the rotating components to grow radially outward. Meanwhile, Low Pressure Turbine Case **204** expands due to heating but at a slower rate. This phenomenon can produce a minimum Blade Tip Clearance **212** "pinch point." As Low Pressure Turbine Case **204** expands due to heating after the pinch point, Blade Tip Clearance **212** increases. Shortly after Low Pressure Turbine Case **204** expansion, Rotor **206** begins to heat up (at a slower rate than Low Pressure Turbine Case **204** due to its mass) and Blade Tip Clearance **212** narrows. As the engine approaches the cruise condition, Low Pressure Turbine Case **204** and Rotor **206** reach thermal equilibrium and Blade Tip Clearance **212** remains relatively constant.

There can be tremendous benefit in narrowing Blade Tip Clearance **212** during the cruise condition. This is often where the greatest reduction in SFC can be gained (longest part of the flight profile). On the other hand, rubbing is generally to be avoided. Minimal clearance typically is maintained at takeoff to ensure thrust generation as well as keeping EGT below its established limit. Hence, it has been the goal of many control systems to attempt to maintain a minimal Blade Tip Clearance **212** while avoiding rubbing over the entire flight profile.

Engine temperatures generally play a large role in determining the operational Blade Tip Clearances **212**. Gas turbine performance, efficiency, and life are directly influenced by Blade Tip Clearances **212**. Tighter Blade Tip Clearances **212** can reduce air leakage over the tips of Blades **208.** This can increase turbine efficiency and permit the engine to meet performance and thrust goals with less fuel burn and lower rotor inlet temperatures. Because the turbine runs at lower temperatures, while producing the same work, hot section components can have increased cycle life. The increased cycle life of hot section components can increase engine service life (TOW) by increasing the time between overhauls.

Engine SFC and EGT are generally directly related to HPTC blade tip clearance. One study has shown that for every 0.001 inch increase in HPTC blade tip clearance, SFC increases approximately 0.1%, while EGT increases one °C. Therefore, it is believed that a 0.010 inch HPTC blade tip clearance decrease may roughly produce a one% decrease in SFC and a ten °C decrease in EGT. Military engines generally show slightly greater HPTC blade tip clearance influence on SFC and EGT due to their higher operating speeds and temperatures over large commercial engines. Improvements of this magnitude may produce large savings in annual fuel and engine maintenance costs amounting to over hundreds of millions of dollars per year.

Reducing fuel consumption may also reduce aero engine total emissions. Recent estimates indicate that Americans alone now fly 764 million trips per year (2.85 airline trips per person). The energy used by commercial aircraft has nearly doubled over the last three decades. The increased fuel consumption accounts for thirteen% of the total transportation sector emissions of carbon dioxide (CO₂). Modern aero engine emissions are made up of over seventy-one% CO₂ with about twenty-eight% water (H₂O) and 0.3% nitrogen oxide (NO₂) along with trace amounts of carbon monoxide (CO), sulfur dioxide (SO₂) etc. Air transport accounts for 2.5% (600 million tons) of the world's CO₂ Production. Emissions from land-based engines, primarily for power generation, contributes amounts in addition to these totals. Clearly a reduction in fuel burn can significantly reduce aero and land-based engine emissions.

Current large commercial engines have cycle lives (defined as the time between overhauls) that vary significantly, ranging typically between 3,000 to 10,000 cycles. The cycle life is primarily determined by how long the engine retains a positive EGT margin. New engines or newly overhauled engines are shipped with a certain cold build blade tip clearance which increases with time. As the engine operating clearances increase, the engine generally works harder (hotter) to produce the same work and is therefore less efficient. This increase in operating temperature, particularly takeoff EGT, can further promote the degradation of hot section components due to thermal fatigue. It is believed that retaining engine takeoff EGT margin by maintaining tight blade tip clearances can dramatically increase engine cycle life. This could also lead to huge savings in engine maintenance over a period of years due to the large overhaul costs.

Previous attempts at blade tip clearance management can generally be categorized by two control schemes, active clearance control ("ACC") and passive clearance control ("PCC"). PCC is defined as any system that sets the desired clearance at one operating point, namely the most severe transient condition (e.g., takeoff, re-burst, maneuver, etc.). ACC, on the other hand, is defined as any system that allows independent setting of a desired blade tip clearance at more than one operating point. The problem with PCC systems is that the minimum clearance, the pinch point, that the system must accommodate often leaves an undesired larger clearance during the much longer, steady state portion of the flight (i.e., cruise).

Typical PCC systems include better matching of rotor and stator growth throughout the flight profile, the use of abradables to limit blade tip wear, the use of stiffer materials and machining techniques to limit or create distortion of static components to maintain or improve shroud roundness at extreme conditions, and the like. Engine manufacturers began using thermal ACC systems in the late 1970's and early 1980's. These systems utilized fan air to cool the support flanges of the HPTC, reducing the case and shroud diameters, and hence blade tip clearance, during cruise conditions.

It is believed that all of the approaches described above have significant problems associated with them. Some are quite expensive, others achieve little results, especially during cruise where the greatest advantages are gained, or require actuation through the case due to the lack of current high temperature actuator capabilities, which raise secondary sealing issues and added weight and mechanical complexity.

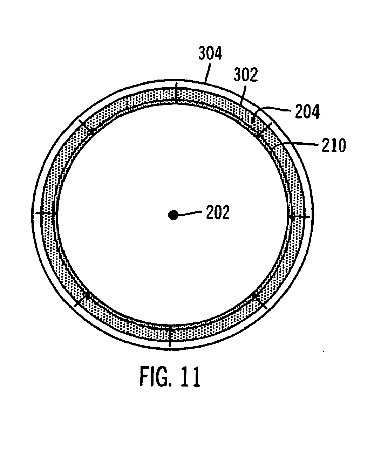

**Figure 3** shows a sectional schematic diagram of the low pressure turbine case of **FIG.2** fitted with stiffener rings in an embodiment of the present description. **Figure 11** shows a cross-sectional schematic diagram of the low pressure turbine case of **FIG.2** fitted with stiffener rings in an embodiment of the present description. Referring now to **FIGs. 3****,** **11**, one or more features of the present description may be applied to existing gas turbine jet engines, or may be incorporated into the design and build of new gas turbine jet engines, for a variety of applications including aviation, marine and land-based engines. Features of the present description are applicable to the HPTC as well as the LPTC, and the description and figures in relation to the LPTC also apply equally to the HPTC and are not limited to the LPTC.

Notches **302**, which may be of several different geometries as described in detail below, are manufactured circumferentially, typically through machining, into the outside diameter of Low Pressure Turbine Case **204** to coincide with one or more locations of the Labyrinth Seals **210**. In addition to locations corresponding to one or more of the locations of the Labyrinth Seals **210,** notches may be machined circumferentially in locations corresponding to "hot spots" that have been identified in Low Pressure Turbine Case **204** through computer modeling, through monitoring surface temperatures, or through visual inspections for cracks when the engine is overhauled. For existing engines, Low Pressure Turbine Case **204** is typically removed in order to repair cracks resulting from the these "hot spots". After such repairs, groves may then be applied through a weld repair through machining. The external rings would then be shrink interference fit in the grooves. It is appreciated that the stiffener rings may be located at other positions of a turbine case, depending upon the particular application It is further appreciated that sizes, dimensions, shapes, materials and clearances may vary, depending upon the particular application.

In one embodiment, Stiffener Rings **304** (shown in cross section in FIG. 3) are shrink interference fit into each Notch **302** so that the **Stiffener ring 304** encircles the circumferential **Notch 302 as shown in** **FIG. 11****.** Since Low Pressure Turbine Case **204** is conical in shape, each Stiffener Ring **304** may have a different diameter. In each case, the inside diameter of each Stiffener Ring **304** may be slightly less than the outside diameter of its corresponding Notch **302**. Each Stiffener Ring **304** is heated, starting with the largest diameter Stiffener Ring **304**. Heating causes each Stiffener Ring **304** to expand, increasing the inside diameter to a diameter that is greater than the outside diameter of its corresponding Notch **302**. Once positioned in Notch **302**, Stiffener Ring **304** is allowed to cool, which shrinks with an interference fit into its corresponding Notch **302.**

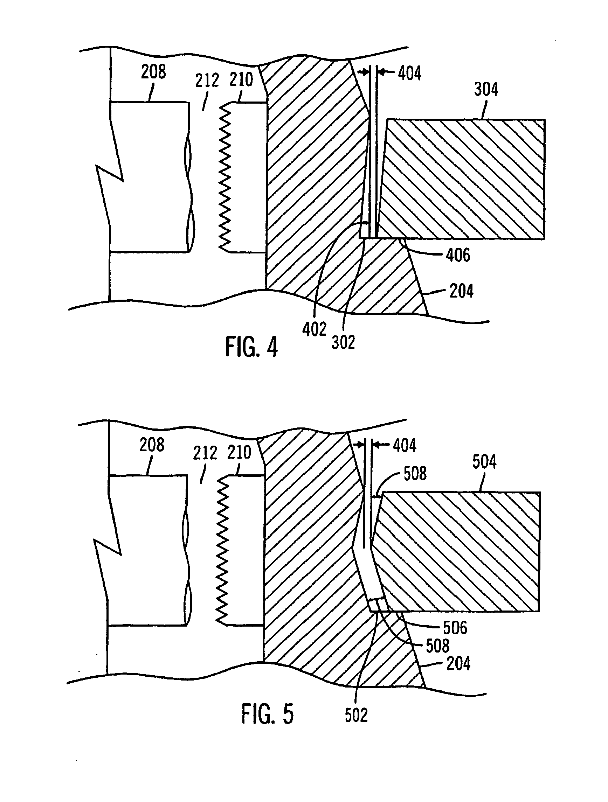

**Figure 4** shows a sectional schematic diagram of Section **A** of the low pressure turbine case of **FIG.3**, showing the stiffener ring about to be seated in an embodiment of the present description. Referring now to **FIG. 4****,** Notch **302** is manufactured circumferentially with a reverse taper relative to the taper of the low pressure turbine case in one embodiment. Angle **402** for the taper will vary from case to case, ranging from just greater than 0° for a cylindrical case to an appropriate degree that would depend upon the specific geometry of a conical case. Stiffener Ring **304** may be machined circumferentially on its inside diameter to match this same taper. Even though Stiffener Ring **304** is shrink interference fit onto Low Pressure Turbine Case **204**, the taper can add extra security so that Stiffener Ring **304** is inhibited from slipping axially on Low Pressure Turbine Case **204**. If Notch **302** was manufactured flat without the taper, there may be an increased possibility of slippage in some applications. When Stiffener Ring **304** has been heated it expands, giving rise to Ring Clearance **404**, enabling Stiffener Ring **304** to be positioned as shown against Heel **406** of Notch **302.** As Stiffener Ring **304** cools, it shrinks in diameter and seats itself circumferentially into Notch **302**. At ambient temperature, due to the smaller diameter of the inner surface of the Stiffener Ring **304** to the diameter of the outer surface of the Notch **302**, a shrink with an interference fit results, with radially compressive circumferential force being applied to Low Pressure Turbine Case **204** by Stiffener Ring **304**, and tensile circumferential force is applied to Stiffener Ring **304** by Low Pressure Turbine Case **204**. In one embodiment, the radially compressive forces may be centered on the axis of rotation defined by center line **202** as schematically shown by arrows in FIG. 11. In one embodiment, the radially compressive forces are applied continuously around the entire circumference of the Notch 302 and the Turbine Case **204** without interruption.

In one example, Low Pressure Turbine Case **204** may be fifty inches in outside diameter at the portion where Blade **208** and Labyrinth Seal **210** are located. In one embodiment, the Stiffener Ring **304** may be fabricated as a solid, unitary or one-piece, continuous or seamless member forged or machined in a closed loop shape. In another embodiment, the Stiffener Ring **304** may be fabricated using an open loop-shaped member and bonding the ends together by welding, for example, to form a closed loop shape. Low Pressure Turbine Case **204** is made of nickel-based super alloy, such as inconel 718, as is Stiffener Ring **304** through a forging process. Super alloy inconel 718 is a high-strength, complex alloy that resists high temperatures and severe mechanical stress while exhibiting high surface stability, and is often used in gas turbine jet engines. It is appreciated that the stiffener ring and the turbine case may be made of a variety of materials, depending upon the particular application. Heating Stiffener Ring **304** to a calculated temperature will cause Stiffener Ring **304** to expand, yielding an appropriate Ring Clearance **404** when Low Pressure Turbine Case **204** is at ambient air temperature of approximately seventy °F. Alternatively, Low Pressure Turbine Case **204** may be cooled with liquid nitrogen or other means to a calculated temperature to cause Low Pressure Turbine Case **204** to shrink in diameter, yielding an appropriate Ring Clearance **404** when Stiffener Ring **304** is at ambient air temperature of approximately seventy °F. Alternatively, an appropriate Ring Clearance **404** may be achieved through a combination of cooling Low Pressure Turbine Case **204** and heating Stiffener Ring **304**, each to various calculated temperatures. Increasing or decreasing the inside diameter of Stiffener Ring **304** will result in more or less radially compressive circumferential force and tensile stress as required for a particular application, and within the stress limits of the material that Stiffener Ring **304** is made from.

In addition, the machining for Low Pressure Turbine Case **204** may be done in a first direction, such as radially, and the machining for Stiffener Ring **304** may be done in a second direction, such as axially, which is more or less perpendicular to the first direction. Since machining leaves a spiral, or record, continuous groove on the machined surfaces, the grooves on each surface will align in a cross-hatch manner to each other, increasing the frictional forces between the two surfaces and reducing the potential for movement of Stiffener Ring **304** within Notch **302,** including axial or rotational movement. The plurality of grooves on Stiffener Ring **304,** which may be made of a nickel-base super alloy for example, may be harder than the plurality of grooves on Notch **302** of Low Pressure Turbine Case **204**, which is typically made of titanium, or in other low pressure turbine casings, possibly steel or aluminum. The nickel-base super alloy grooves can dent into or form an indentation in the softer titanium, steel, or aluminum grooves. Alternatively, Stiffener Ring **304** may simply be spot welded in one or more locations to Notch **302**, or bolted to one or more flanges secured to Notch **302,** to keep Stiffener Ring **304** from spinning or otherwise moving in relation to Notch **302.** Machining in cross directions may not be needed in this case.

By thus positioning Stiffener Rings **304** in the manner described, Blade Tip Clearance **212** may be improved in some applications, especially during cruise operation of the engine in some applications. An engine designer may as a result, design the engine to have a reduced blade tip clearance than may otherwise be appropriate for a given engine design absent such stiffener rings. It is also appreciated that other or different benefits, advantages, improvements or other features may be utilized alone or in combination, depending upon the particular application. In one application, the radially compressive circumferential force (represented by arrows in FIG. 11 ) applied by the Stiffener Rings 304 can prevent Low Pressure Turbine Case **204** from expanding due to heat as much as it would otherwise expand. In one aspect, the Stiffener Rings 304 function as a girdle for the Turbine Case 204, to inhibit expansion or going out of round and otherwise reinforce the Turbine Case 204. Stiffener Rings **304** may be made of the same material as Low Pressure Turbine Case **204**, or may be made of a different material with a lower coefficient of thermal expansion, which would increase the radially compressive circumferential force applied over that of a stiffener ring of the same material as the case as the temperature rises. The compressive forces may be sufficient to form an indentation in the turbine case such as in the Notch 302.

In many engine designs, heat is mainly dissipated from the outside surface area of Low Pressure Turbine Case **204** by convection. Another benefit which may be achieved by adding Stiffener Rings **304** to Low Pressure Turbine Case **204** is that heat may be dissipated at a greater rate because Stiffener Rings **304** can act as cooling fins, which can result in cooler operating temperatures within Low Pressure Turbine Case **204**. This cooling may also contribute to less expansion and smaller Blade Tip Clearance **212**. Also, Stiffener Rings **304** can help to maintain roundness of Low Pressure Turbine Case **204**. Again, it is appreciated that other or different benefits, advantages, improvements or other features may be utilized alone or in combination, depending upon the particular application.

**Figure 5** shows a sectional schematic diagram of a section of a low pressure turbine case showing the stiffener ring about to be seated in another embodiment of present description. Referring now to **FIG. 5**, Notch **502** is machined circumferentially with a chevron shape in one embodiment. Angle **508** may vary by application. Stiffener Ring **504** is machined circumferentially on its inside diameter to match this same chevron shape. Even though Stiffener Ring **504** is shrink interference fit onto Low Pressure Turbine Case **204,** the chevron shape can add extra security to inhibit the Stiffener Ring **304** from slipping off of Low Pressure Turbine Case **204**. When Stiffener Ring **504** has been heated it expands, giving rise to Ring Clearance **404**, enabling Stiffener Ring **504** to be positioned as shown against Heel **506** of Notch **502**. As Stiffener Ring **504** cools, it shrinks in diameter and seats itself circumferentially into Notch **502**. At ambient temperature, due to the smaller inside diameter of Stiffener Ring **504** to the outside diameter of Notch **502**, a shrink with an interference fit results, with radially compressive circumferential force being applied to Low Pressure Turbine Case **204** by Stiffener Ring **504**, and tensile circumferential force is applied to Stiffener Ring **504** by Low Pressure Turbine Case **204**.

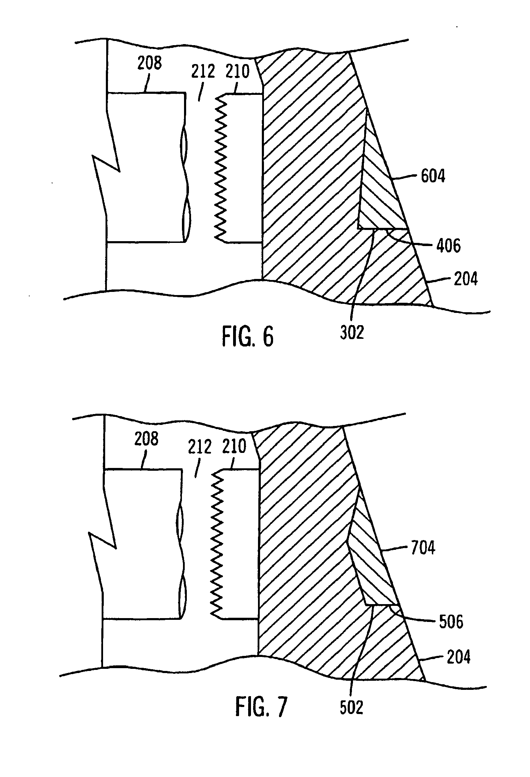

**Figure 6** shows a sectional schematic diagram of a section of a low pressure turbine case showing the stiffener ring seated in another embodiment of the present description. Referring now to **FIG. 6**, for aero applications, where added weight to the engine is a concern, Stiffener Ring **604** is manufactured to have a profile that, when seated as shown in **FIG.6****,** is substantially flush with the outer surface of Low Pressure Turbine Case **204.** Notch **302** with a reverse taper as shown in **FIG.4** is machined into Low Pressure Turbine Case **204**. In addition, based on the engine to be designed or to be retrofitted, Notch **302** may be machined deeper, and/or wider, and Stiffener Ring **604** given added depth, and/or width, in order to meet the radially compressive and tensile circumferential stress requirements.

**Figure 7** shows a sectional schematic diagram of a section of a low pressure turbine case showing the stiffener ring seated in another embodiment of the present description. Referring now to **FIG. 7**, for aero applications, where added weight to the engine is a concern, Stiffener Ring **704** is manufactured to have a profile that, when seated as shown in **FIG.6**, is substantially flush with the outer surface of Low Pressure Turbine Case **204.** Notch **502** with a chevron shape as shown in **FIG. 5** is machined into Low Pressure Turbine Case **204**. In addition, based on the engine to be designed or to be retrofitted, Notch **502** may be machined deeper and/or wider, and Stiffener Ring **704** given added depth, and/or width, in order to meet the radially compressive and tensile stress requirements. In addition to aero or aviation applications, it is appreciated that flush embodiments as well as other embodiments may be utilized in land-based and marine applications as well.

One skilled in the art will recognize that, in addition to the reverse taper and chevron designs for the notch and stiffener ring as shown in **FIGS. 4-7**, various other designs may be utilized to accomplish the same or similar or different goals. For example, the notch may have one or more ridges and channels, angular or undulating, that will match up with one or more channels and ridges, angular or undulating, on the inside surface of the stiffener ring. Alternatively, the notch and stiffener ring may have an inverted chevron shape. In other embodiments, a notch may not be utilized. Many other such shapes may be envisioned without departing from the scope of the present description.

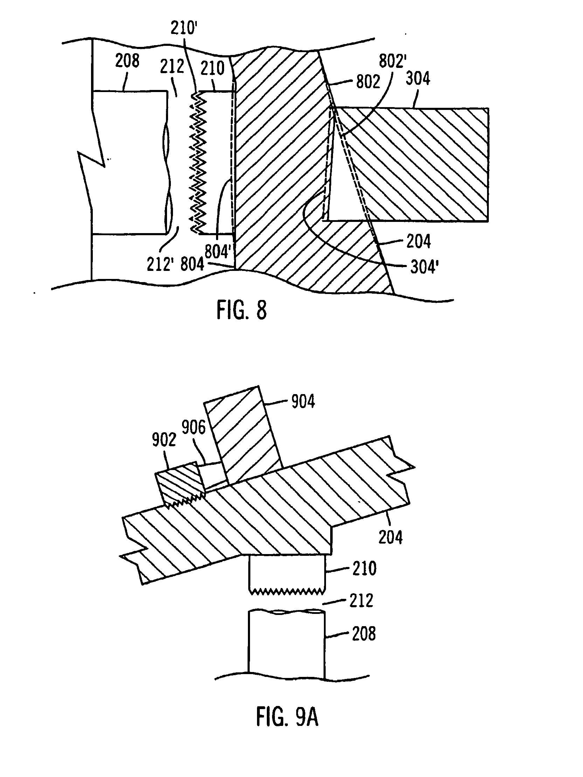

**Figure 8** shows the improvement in blade tip clearance under load in an embodiment of the present description. Referring now to **FIG. 8****,** Stiffener Ring **304** as shown in **FIG.4** has been shrink interference fit onto Low Pressure Turbine Case **204**, and the engine is now under load, such as during cruise operation. Labyrinth Seal **210** and Low Pressure Turbine Case **204** with Inner Surface **802** and Outer Surface **804** are depicted with solid lines in the positions they would be in without Stiffener Ring **304.** Low Pressure Turbine Case **204** would have expanded in diameter, and Labyrinth Seal **210** would have moved away from Blade **208**, giving rise to a wider Blade Tip Clearance **212**. However, due to the radially compressive force exerted by Stiffener Ring **304** on Low Pressure Turbine Case **204,** Labyrinth Seal **210** is in the position indicated in phantom as **210'**, and Ring **304,** Inner Surface **802** and Outer Surface **804** of Low Pressure Turbine Case **204** are in the positions indicated in phantom as **304', 802'**, and **804'**, thus reducing Blade Tip Clearance **212'**.

Thus, in one aspect of the present description, the amount of expansion that would normally occur due to heating in the LPTC and the HPTC, is reduced, and consequently blade tip clearance may be improved. As stated above, increased blade tip clearance can accelerate the effects of low cycle fatigue and erosion due to increased temperatures in the HPTC and LPTC, and degrade EGT margin and engine life. In general, for large gas turbine engines, it is believed that blade tip clearance reductions on the order of 0.010 inch can produce decreases in SFC of one% and EGT of ten °C. It is believed that improved blade tip clearance of this magnitude can produce fuel and maintenance savings of over hundreds of millions of dollars per year. Reduced fuel burn can also reduce aircraft emissions, which currently account for thirteen % of the total U.S. transportation sector emissions of CO₂. In another aspect, blade tip clearances can be reduced at cruise condition to make a significant impact on SFC and EGT margin and improve turbine efficiency. Moreover, the increased outer surface area of the HPTC and LPTC due to the stiffener rings can, in certain embodiments, increase cooling and result in lower internal temperatures which can lengthen the cycle life of the engine. In yet another aspect, an increase in payload per engine may be achieved due to the improvement in blade tip clearance. Additional pounds of freight may be transported per takeoff and landing. It is further appreciated that features of the present description could readily replace expensive passive clearance control options. It is appreciated that reductions in one or more of out-of-roundness, blade tip clearance, SFC, EGT or polluting emissions may be achieved utilizing one or more features herein described. For example, fabricating a stiffener ring from a material having a lower coefficient of thermal expansion than that of the turbine case material, may facilitate achieving one or more of these or other reductions. Similarly, it is appreciated that one or more of these reductions or other benefits may be achieved fabricating a turbine case and stiffener ring of the same material.

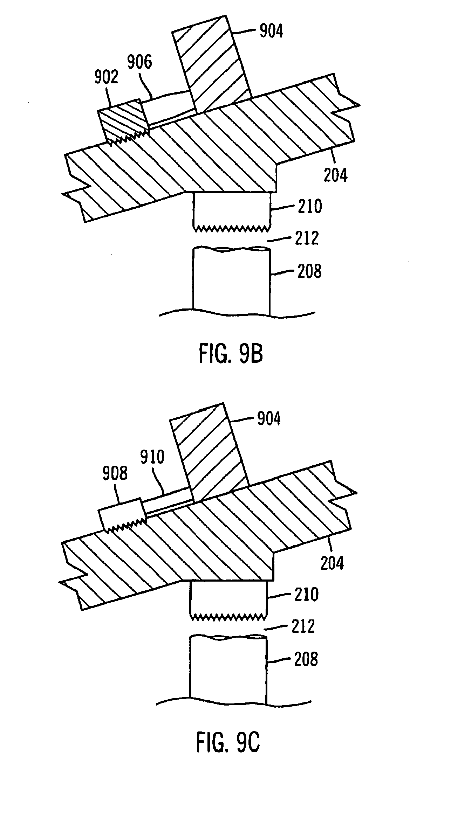

**FIGS. 9A****,** **9B, and 9C** show sectional schematic diagrams of a section of a low pressure turbine case having the stiffener ring positioned on the low pressure turbine case with a hydraulic nut and secured with a locking nut in another embodiment. Referring now to **FIG. 9A**, Stiffener Ring **904** is sized to fit without pressure in a location near an internal Blade **208** and Labyrinth Seal **210**, or previously identified "hot spot", and placed in position there. Next, a Hydraulic Nut **902** is threadably mounted to Low Pressure Turbine Case **204**. Hydraulic Nut **902** has Piston **906** which engages with Stiffener Ring **904.**

In **FIG. 9B**, Piston **906** has extended from Hydraulic Nut **902,** pushing Stiffener Ring **904** toward the larger diameter end of Low Pressure Turbine Case **204**, thus positioning Stiffener Ring **904** in the optimum location in relation to the internal Blade **208** and Labyrinth Seal **210** and resulting in an interference fit. The amount that Piston **906** is extended by Hydraulic Nut **902** is calculated to produce a desired compressive circumferential force by Stiffener Ring **904.**

In **FIG. 9C**, Hydraulic Nut **902** has been removed, and Locking Nut **908** has been threadably attached in its place onto Low Pressure Turbine Case **204**. Retainer **910** of Locking Nut **908** engages with Stiffener Ring **904,** thus securing Stiffener Ring **904** in place. This process is repeated for as many stages as required based upon turbine design. This embodiment may add excessive weight and would most likely be best suited for land based applications where weight is not of such concern.

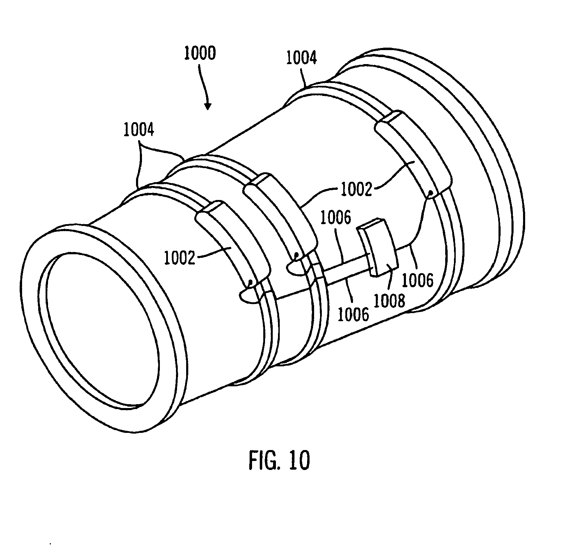

**FIG.10** shows a schematic diagram of a low pressure turbine case having stiffener rings actuated by hydraulic, electric, or other means in another embodiment of the present description. Referring now to **FIG. 10**, Low Pressure Turbine Case **1000** has Stiffener C-Rings **1004** positioned at predetermined locations to coincide with blade/labyrinth seals and/or "hot spots". In this embodiment, Stiffener C-Rings **1004** are not shrink interference fit onto Low Pressure Turbine Case **1000**. A notch for each Stiffener C-Ring **1004** may still be machined into Low Pressure Turbine Case **1000**, but the stiffener rings are c-rings rather than continuous rings. Each end of Stiffener C-Ring **1004** is linked to an Actuator Means **1002,** which when actuated, pulls each end of Stiffener C-Ring **1004** together, exerting compressive force including radially compressive force on Low Pressure Turbine Case **1000**. The inside surface of each Stiffener C-Ring **1004**, or the notch surface, or both, may be coated with Teflon@ or some other lubricating substance to facilitate slippage when tightened.

Each Actuator Means **1002** is connected to Controller **1008** through Electrical/Electronic Connections **1006**. Controller 1008 receives temperature readings from multiple temperature sensors located near each Stiffener C-Ring **1004** (not shown). It is also possible to derive the LPTC temperature from EGT temperature readings and use these readings for feedback to Controllers **1008**. As the temperatures being monitored throughout Low Pressure Turbine Case **1000** rise, Controller **1008** processes the temperature data and determines how much each of the ends of each Stiffener C-Ring **1004** need to be pulled together by each Actuator Means **1002** in order to exert the proper compressive circumferential force on Low Pressure Turbine Case **1000** to provide a suitable benefit such as maintaining an optimum blade tip clearance or counterbalancing a "hot spot", for example.

In an alternate embodiment, instead of a c-ring, a chain-like multiple segmented ring may be coupled together by Actuator Means **1002**. In another embodiment, the stiffener rings may be made of a strip of non-metallic material, such as Kevlar®. The inside surface of the Kevlar®, or the notch surface, or both may also be coated with Teflon@ or some other lubricating substance to facilitate slippage when tightened.

Having described various features, it will be understood by those skilled in the art that many and widely differing embodiments and applications will suggest themselves without departing from the scope of the present description.

## Claims

1. A method, comprising:
encircling an outer circumferential surface of a turbine case of a gas turbine jet engine using an inner circumferential surface of a stiffener ring; and
applying radially compressive forces to said outer circumferential surface of said turbine case, along the length of the circumference of said inner circumferential surface, using said stiffener ring encircling said turbine case.

2. The method of claim 1 wherein said radially compressive force applying includes shrink interference fitting said stiffener ring inner circumferential surface to said outer circumferential surface of said turbine case.

3. The method of claim 1 wherein said outer circumferential surface is conically shaped and wherein said radially compressive force applying includes seating said stiffener ring inner circumferential surface within a notch defined by said conically shaped outer circumferential surface of said turbine case and shaped to secure said stiffener ring against displacement in a direction longitudinal to said turbine case.

4. The method of claim 1 wherein said radially compressive force applying includes seating said stiffener ring flush within a notch defined by said outer circumferential surface of said turbine case and shaped to secure said stiffener ring against displacement in a direction longitudinal to said turbine case.

5. The method of claim 1 wherein said turbine case surrounds a turbine adapted for rotation within said turbine case along an axis of rotation wherein said radially compressive forces are directed to a center located on said axis of rotation.

6. The method of claim 5 wherein said turbine case has a seal encircling tips of said turbine blades of said turbine and wherein the location of said stiffener ring on said turbine case outer surface coincides with the location of said seal on said turbine case inner surface and said radially compressive force applying confines the clearance between said seal and said blade tips to be within a predetermined range.

7. The method of claim 6 wherein said turbine case is formed of a first material and wherein said stiffener ring is formed of a second material that is different from said first material of said turbine case, said second material having a lower coefficient of thermal expansion than said first material of said turbine.

8. The method of claim 6 wherein said radially compressive forces applied to said outer circumferential surface of said turbine case, form an indentation in said outer circumferential surface along the length of the circumference of said inner circumferential surface of the stiffener ring, as the temperature of the turbine case rises.

9. The method of claim 1 further comprising redesigning the engine to reduce blade tip clearance as compared to the blade tip clearance of said engine absent said radially compressive force applying.

10. The method of claim 1 further comprising:
encircling a second outer circumferential surface of said turbine case of said gas turbine jet engine using a second inner circumferential surface of a second stiffener ring; and
applying radially compressive forces to said second outer circumferential surface of said turbine case, along the length of the circumference of said second inner circumferential surface, using said second stiffener ring encircling said turbine case.

11. The method of claim 1 further comprising:
operating said gas turbine jet engine including rotating a turbine within the turbine case along an axis of rotation; and
applying the radially compressive forces to the outer circumferential surface of said turbine case using the stiffener ring encircling said turbine case, said radially compressive forces being applied along the length of the circumference of the inner circumferential surface of said stiffener ring and directed to a center positioned on said axis of rotation while operating said gas turbine jet engine.

12. The method of claim 11 further comprising dissipating heat from said turbine case using said stiffener ring.

13. The method of claim 11 wherein said applying radially compressive forces permits at least one of the following to be reduced during operation of said engine:
a) turbine case out-of-roundness;
b) specific fuel consumption;
c) clearance between an inner surface of said turbine case and blade tips of said turbine;
d) exhaust gas temperature;
e) exhaust gas pollution.

14. The method of claim 13 wherein said turbine case is formed of a first material and wherein said stiffener ring is formed of a second material that is different from said first material of said turbine case, said second material having a lower coefficient of thermal expansion than said first material of said turbine.

15. A gas turbine jet engine, comprising:
a turbine case having an outer circumferential surface;
a turbine adapted to rotate along an axis of rotation within said turbine case; and
a stiffener ring having an inner circumferential surface adapted to apply radially compressive forces to said outer circumferential surface of said turbine case, along the length of the circumference of said inner circumferential surface.

16. The engine of claim 15 wherein said stiffener ring is affixed to said turbine case with a shrink interference fitting which causes said stiffener ring to apply said radially compressive forces to said outer circumferential surface of said turbine case.

17. The engine of claim 15 wherein said outer circumferential surface of said turbine case defines a notch adapted to receive said stiffener ring and secure said stiffener ring against displacement in a direction longitudinal to said turbine case.

18. The engine of claim 15 wherein said outer circumferential surface of said turbine case defines a notch adapted to receive said stiffener ring flush within said notch and secure said stiffener ring against displacement in a direction longitudinal to said turbine case.

19. The engine of claim 15 wherein said radially compressive forces are directed to a center located on said axis of rotation.

20. The engine of claim 19 wherein said turbine has turbine blade, each of which has a tip at a distal end of each blade, and wherein said turbine case has an inner circumferential surface which has a seal encircling said tips of said turbine blades of said turbine and wherein the location of said stiffener ring on said turbine case outer surface coincides with the location of said seal on said turbine case inner surface and said radially compressive force applied by said stiffener ring confines the clearance between said seal and said blade tips to be within a predetermined range.

21. The engine of claim 19 wherein said outer circumferential surface of said turbine case defines a notch adapted to receive said stiffener ring and secure said stiffener ring against displacement in a direction longitudinal to said turbine cases and wherein said notch is at a longitudinal location coinciding with said seal on said inner surface of said turbine case.

22. The engine of claim 15 wherein said turbine case is formed of a first material and wherein said stiffener ring is formed of a second material that is different from said first material of said turbine case, said second material having a lower coefficient of expansion than said first material of said turbine case.

23. The engine of claim 20 further wherein said stiffener ring permits redesigning the engine to reduce blade tip clearance as compared to the blade tip clearance of said engine absent said radially compressive force applying.

24. The engine of claim 20 wherein said stiffener ring permits at least one of the following to be reduced during operation of said engine:
a) turbine case out-of-roundness;
b) specific fuel consumption;
c) clearance between an inner surface of said turbine case and blade tips of said turbine;
d) exhaust gas temperature;
e) exhaust gas pollution.

25. The engine of claim 15 wherein said turbine case has second outer circumferential surface, and wherein said engine further comprises a second stiffener ring having a second inner circumferential surface adapted to apply radially compressive forces to a second outer circumferential surface of said turbine case, along the length of the circumference of said second inner circumferential surface.
